# EUROPÄISCHE PATENTSCHRIFT

(11) **EP 4 405 574 B1**
(45) Veröffentlichungstag und Bekanntmachung des Hinweises auf die Patenterteilung: **01.10.2025**
(21) Anmeldenummer: 22764424.2
(22) Anmeldetag: 11.08.2022
(51) Int. Cl.: F01N 3/20, F01N 3/05, F01N 3/32, F02B 37/16

(54) **VERBRENNUNGSKRAFTMASCHINE FÜR EIN KRAFTFAHRZEUG, INSBESONDERE FÜR EINEN KRAFTWAGEN**
INTERNAL COMBUSTION ENGINE FOR A MOTOR VEHICLE, IN PARTICULAR FOR A CAR
MOTEUR À COMBUSTION INTERNE POUR UN VÉHICULE AUTOMOBILE, EN PARTICULIER POUR UNE VOITURE

(30) Priorität: 21.09.2021 DE 102021004774
(43) Veröffentlichungstag der Anmeldung: 31.07.2024
(73) Patentinhaber: Mercedes-Benz Group AG, 70372 Stuttgart (DE)
(72) Erfinder: KREMER, Adolf, 71686 Remseck (DE); LOLL, Steffen, 70178 Stuttgart (DE); BRUNELLE, Frederic, 70184 Stuttgart (DE); FENZL, Markus, 74670 Forchtenberg (DE); SCHAIBLE, Andreas, 71093 Weil im Schönbuch (DE); RUETZEL, Bastian, 76646 Bruchsal (DE)
(74) Vertreter: Novagraaf Group
(86) Internationale Anmeldenummer: PCT/EP2022/072591
(87) Internationale Veröffentlichungsnummer: WO 2023/046361

(56) Entgegenhaltungen:
- DE-A1- 102016 211 274
- DE-A1- 102016 211 274
- DE-A1- 102019 008 956
- DE-A1- 102019 008 956
- DE-A1- 4 338 696
- US-A1- 2004 020 189

## Beschreibung

Die Erfindung betrifft eine Verbrennungskraftmaschine für ein Kraftfahrzeug, insbesondere für einen Kraftwagen, gemäß dem Oberbegriff von Patentanspruch 1.

Eine solche Verbrennungskraftmaschine für ein Kraftfahrzeug, insbesondere für einen Kraftwagen, ist beispielsweise bereits der DE 10 2007 057 603 A1 als bekannt zu entnehmen. Die Verbrennungskraftmaschine weist einen von Luft durchströmbaren Ansaugtrakt auf, in welchem ein Verdichter zum Verdichten der den Ansaugtrakt durchströmenden Luft angeordnet ist. Außerdem weist die Verbrennungskraftmaschine einen vom Abgas der Verbrennungskraftmaschine durchströmbaren Abgastrakt sowie ein Sekundärluftsystem auf, welches mit dem Abgastrakt an wenigstens einer Einleitstelle fluidisch verbunden ist. Das Sekundärluftsystem ist mit dem Ansaugtrakt an einer stromab des Verdichters angeordneten Abzweigstelle fluidisch verbunden. An die Abzweigstelle ist mittels des Sekundärluftsystems zumindest ein Teil der mittels des Verdichters verdichteten Luft aus dem Ansaugtrakt abzweigbar und in das Sekundärluftsystem einleitbar. Die an der Abzweigstelle aus dem Ansaugtrakt abgezweigte und in der Folge in das Sekundärluftsystem eingeleitete Luft kann das System durchströmen und wird mittels des Sekundärluftsystems zu der Einleitstelle geführt und an der Einleitstelle in den Abgastrakt eingeleitet.

Des Weiteren offenbart die DE 10 2013 226 063 A1 eine Brennkraftmaschine, mit einem Verbrennungsmotor, einen Verdichter aufweisenden Frischgasstrang und einen eine Abgasnachbehandlungseinrichtung sowie einen Temperatursensor-aufweisenden Abgasstrang. Außerdem ist aus der DE 10 2019 008 956 A1 eine Abgasanlage für eine Verbrennungskraftmaschine bekannt.

Aufgabe der vorliegenden Erfindung ist es, eine Verbrennungskraftmaschine der eingangs genannten Art derart weiterzuentwickeln, dass ein besonders emissionsarmer Betrieb realisiert werden kann.

Diese Aufgabe wird durch eine Verbrennungskraftmaschine mit den Merkmalen des Patentanspruchs 1 gelöst. Vorteilhafte Ausgestaltungen mit zweckmäßigen Weiterbildungen der Erfindung sind in den übrigen Ansprüchen angegeben.

Um eine Verbrennungskraftmaschine der im Oberbegriff des Patentanspruchs 1 eingegebenen Art derart weiterzuentwickeln, dass ein besonders emissionsarmer Betrieb realisiert werden kann, ist es erfindungsgemäß vorgesehen, dass das Sekundärluftsystem mit dem Ansaugtrakt auch an einer stromauf des Verdichters angeordneten, zweiten Abzweigstelle fluidisch verbunden ist. An der zweiten Abzweigstelle kann mittels des Sekundärluftsystems zumindest ein Teil der stromauf des Verdichters den Ansaugtrakt durchströmenden Luft aus dem Ansaugtrakt abgezweigt und in das Sekundärluftsystem eingeleitet werden. Die an der zweiten Abzweigstelle aus dem Abgastrakt abgezweigte und in das Sekundärluftsystem eingeleitete Luft kann das Sekundärluftsystem durchströmen und wird mittels des Sekundärluftsystems zu der Einleitstelle geleitet und als Sekundärluft in den Abgastrakt eingeleitet. Somit kann das Sekundärluftsystem sowohl an der ersten Abzweigstelle und somit stromab des Verdichters als auch an der zweiten Abzweigstelle und somit stromauf des Verdichters Luft aus dem Ansaugtrakt abzweigen und als Sekundärluft zu der Einleitstelle führen und an der Einleitstelle in den Abgastrakt einleiten.

Das Sekundärluftsystem weist dabei eine Sekundärluftpumpe auf, mittels welcher die an der zweiten Abzweigstelle abgezweigte Luft durch das Sekundärluftsystem durchgefördert und zu der Einleitstelle hin gefördert und insbesondere in den Abgastrakt hineingefördert werden kann. Durch die Erfindung kann eine besonders vorteilhafte und bedarfsgerechte Sekundärlufteinblasung realisiert werden. Unter der Sekundärlufteinblasung ist zu verstehen, dass die in der jeweiligen Abzweigstelle abgezweigte Luft als Sekundärluft an der Einleitstelle in den Abgastrakt eingeleitet werden kann, insbesondere unter Umgehung von oder aller Brennräume der Verbrennungskraftmaschine. Die Luft, die an der ersten Abzweigstelle und somit stromab des Verdichters aus dem Ansaugtrakt abgezweigt wird, wird auch als Verdichterluft bezeichnet. Die Erfindung ermöglicht es insbesondere, beispielsweise ab einem bestimmten Zeitpunkt sowohl die Verdichterluft als auch die an der zweiten Abzweigstelle aus dem Ansaugtrakt abgezweigte Luft in den Abgastrakt einzuleiten, das heißt in den Abgastrakt einzublasen. Beispielsweise ist die Einleitstelle in einem Abgaskanal, insbesondere in einem Auslasskanal, angeordnet, wodurch die Sekundärluft besonders vorteilhaft in den Abgastrakt eingeblasen werden kann. Beispielsweise ist die Einleitstelle in einem insbesondere durch einen Zylinderkopf der Verbrennungskraftmaschine gebildeten oder begrenzten Auslasskanal angeordnet. Insbesondere können mehrere, insbesondere alle, Abgaskanäle, insbesondere Auslasskanäle, der Verbrennungskraftmaschine eine jeweilige Einleitstelle aufweisen, an welcher die Sekundärluft in den Abgastrakt eingeblasen werden kann. Die Erfindung ermöglicht es insbesondere, in allen Betriebsbereichen der auch als Verbrennungsmotor bezeichneten und vorzugsweise als Hubkolbenmotor ausgebildeten Verbrennungskraftmaschine eine vorteilhaft große Menge an Sekundärluft in den Abgastrakt einzuleiten und somit einen besonders emissionsarmen Betrieb der Verbrennungskraftmaschine zu ermöglichen.

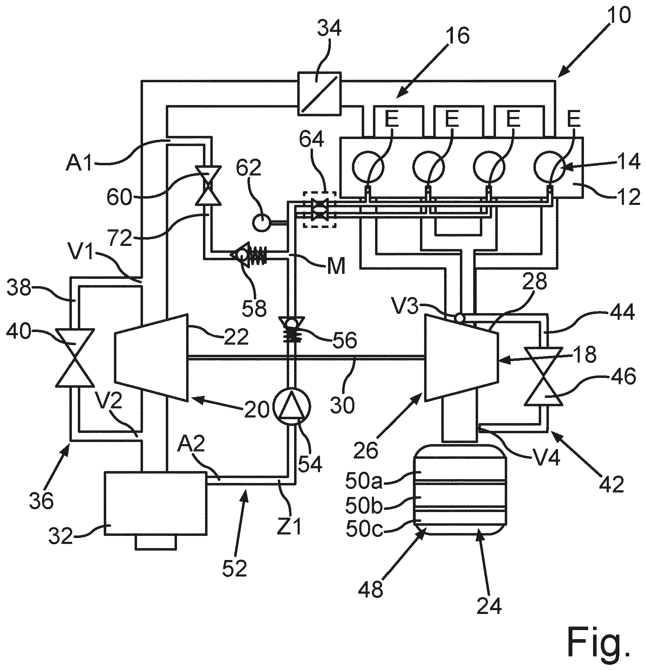

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Fig. eine schematische Darstellung einer Verbrennungskraftmaschine für ein Kraftfahrzeug, insbesondere für einen Kraftwagen, mit einem Sekundärluftsystem.

Die einzige Fig. zeigt in einer schematischen Darstellung eine Verbrennungskraftmaschine 10 für ein Kraftfahrzeug, insbesondere für einen Kraftwagen. Die Verbrennungskraftmaschine 10 weist einen auch als Zylinderblock bezeichneten Motorblock 12 auf, durch welchen Zylinder 14 der Verbrennungskraftmaschine 10 gebildet sind. Der jeweilige Zylinder 14 begrenzt einen jeweiligen Brennraum, in welchem während eines befeuerten Betriebs der Verbrennungskraftmaschine 10 Verbrennungsvorgänge ablaufen. Aus dem jeweiligen Verbrennungsvorgang resultiert Abgas der Verbrennungskraftmaschine 10. Die Verbrennungskraftmaschine 10 weist einen von Luft durchströmbaren Ansaugtrakt 16 auf, mittels welchem die den Ansaugtrakt 16 durchströmende Luft zu den Brennräumen und in die Brennräume der Verbrennungskraftmaschine 10 geführt wird. Die Verbrennungskraftmaschine weist dabei einen Abgasturbolader 18 auf, welcher einen in dem Ansaugtrakt 16 angeordneten Verdichter 20 mit einem in dem Ansaugtrakt 16 angeordneten Verdichterrad 22 aufweist. Mittels des Verdichterrads 22 und somit mittels des Verdichters 20 kann die den Ansaugtrakt 16 durchströmende Luft verdichtet werden. Das Verdichten der den Ansaugtrakt 16 durchströmenden Luft wird auch als Aufladen bezeichnet, sodass die verdichtete Luft auch als Ladeluft bezeichnet wird.

Die Verbrennungskraftmaschine 10 weist auch einen Abgastrakt 24 auf, welcher von dem Abgas aus dem Brennraum und somit von dem Abgas der Verbrennungskraftmaschine 10 durchströmbar ist. Dabei weist der Abgasturbolader 18 eine in dem Abgastrakt 24 angeordnete Turbine 26 mit einem in dem Abgastrakt 24 angeordneten Turbinenrad 28 auf, welches mittels des den Abgastrakt 24 durchströmenden Abgases antreibbar ist. Das Verdichterrad 22 ist über eine Welle 30 des Abgasturboladers 18 von dem Turbinenrad 28 antreibbar ist, wodurch die den Ansaugtrakt 16 durchströmende Luft verdichtet werden kann. In dem Ansaugtrakt 16 ist stromauf des Verdichters 20, das heißt stromauf des Verdichterrads 22, ein Luftfilter 32 angeordnet, mittels welchem die den Ansaugtrakt 16 durchströmende Luft gefiltert wird. Außerdem ist in dem Ansaugtrakt 16 stromab des Verdichters 20 und stromauf der Brennräume eine Drosselklappe 34 angeordnet, mittels welcher beispielsweise eine jeweilige, in den jeweiligen Brennraum einströmende Menge der Luft einstellbar ist.

Dem Verdichter 20 ist ein Schubumluftsystem 36 mit einer Schubumluftleitung 38 zugeordnet, welche an Verbindungsstellen V1 und V2 fluidisch mit dem Ansaugtrakt 16 verbunden ist. Mittels der Schubumluftleitung 38 kann eine Verbindungsstelle V1 zumindest ein Teil der den Ansaugtrakt 16 durchströmenden Luft aus dem Ansaugtrakt 16 abgezweigt und in die Schubumluftleitung 38 eingeleitet werden. Die in die Schubumluftleitung 38 eingeleitete Luft kann die Schubumluftleitung 38 durchströmen und wird mittels der Schubumluftleitung 38 zu der Einleitstelle V2 geführt und kann an der Verbindungsstelle V2 in den Ansaugtrakt 16 wieder einströmen. Es ist erkennbar, dass die Verbindungsstelle V2 stromab des Luftfilters 32 und stromauf des Verdichterrads 22 angeordnet ist, wobei die Verbindungsstelle V1 stromab des Verdichterrads 22 und stromauf der Drosselklappe 34 angeordnet ist. Das Schubumluftsystem 36 umfasst außerdem ein Schubumluftventil 40, welches in der Schubumluftleitung 38 angeordnet ist. Beispielsweise kann mittels des Schubumluftventils 40 eine die Schubumluftleitung 38 durchströmende Menge der die Schubumluftleitung 38 durchströmenden Luft eingestellt werden. Insbesondere ist das Schubumluftventil 40 als elektrisches Schubumluftventil ausgebildet.

Der Turbine 26 ist eine Umgehungseinrichtung 42 zugeordnet, welche eine Umgehungsleitung 44 aufweist. Die Umgehungsleitung 44 ist an einer Verbindungsstelle V3 und an einer Verbindungsstelle V4 fluidisch mit dem Abgastrakt 24 verbunden. Mittels der Umgehungsleitung 44 kann an der Verbindungsstelle V3 zumindest ein Teil des den Abgastrakt 24 durchströmenden Abgases aus dem Abgastrakt 24 abgezweigt und in die Umgehungsleitung 44 eingeleitet werden. Das in die Umgehungsleitung 44 eingeleitete Abgas kann die Umgehungsleitung 44 durchströmen und wird mittels der Umgehungsleitung 44 zu der Verbindungsstelle V4 geführt und kann an der Verbindungsstelle V4 wieder in den Abgastrakt 24 einströmen. Das die Umgehungsleitung 44 durchströmende Abgas umgeht die Turbine 26 und treibt somit das Turbinenrad 28 nicht an. Die Umgehungsleitung 44 wird auch als Bypass oder Wastegate bezeichnet. Die Umgehungseinrichtung 42 umfasst ein Umgehungsventil 46, welches auch als Bypass-Ventil oder Wastegate-Ventil bezeichnet wird und in der Umgehungsleitung 44 angeordnet ist. Mittels des Umgehungsventils 46 kann eine Menge des die Umgehungsleitung 44 durchströmenden Abgases eingestellt werden. Es ist erkennbar, dass die Verbindungsstelle V3 stromauf der Turbine 26, das heißt stromauf des Turbinenrads 28 angeordnet ist, wobei die Verbindungsstelle V4 stromab des Turbinenrads 28, das heißt stromab der Turbine 26 angeordnet ist.

In dem Abgastrakt 24 ist außerdem eine Abgasnachbehandlungseinrichtung 48 zugeordnet, welche stromab der Turbinen 26, insbesondere stromab der Verbindungsstelle V4, angeordnet ist. Die Abgasnachbehandlungseinrichtung 48 ist von dem Abgas der Verbrennungskraftmaschine durchströmbar und kann das Abgas nachbehandeln. Hierzu umfasst die Abgasnachbehandlungseinrichtung beispielsweise Abgasnachbehandlungselemente 50a-c. Das Abgasnachbehandlungselement 50a ist beispielsweise als ein Katalysator, insbesondere als ein 3-Wege-Katalysator, ausgebildet. Das Abgasnachbehandlungselement 50b ist beispielsweise als Partikelfilter, insbesondere als Ottopartikelfilter (OPF), ausgebildet. Das Abgasnachbehandlungselement 50c ist beispielsweise als Katalysator ausgebildet. Insbesondere kann die auch als Verbrennungsmotor oder Motor bezeichnete Verbrennungskraftmaschine als ein Ottomotor ausgebildet sein.

Die Verbrennungskraftmaschine 10 weist auch ein Sekundärluftsystem 52 auf. Das Sekundärluftsystem 52 ist an einer ersten Abzweigstelle A1 fluidisch mit dem Ansaugtrakt 16 verbunden. Außerdem ist das Sekundärluftsystem 52 an Einleitstellen E fluidisch mit dem Abgastrakt 24 verbunden. Insbesondere kann je Brennraum wenigstens oder genau eine Einleitstelle E vorgesehen sein, an welcher das Sekundärluftsystem 52 fluidisch mit dem Abgastrakt 24 verbunden ist. Insbesondere ist es denkbar, dass die Einleitstelle E, insbesondere direkt, in einem Abgaskanal, insbesondere in einem Auslasskanal, angeordnet ist. Beispielsweise ist der Auslasskanal durch einen Zylinderkopf der Verbrennungskraftmaschine 10 gebildet, das heißt begrenzt. Der Zylinderkopf ist separat von dem Motorblock 12 ausgebildet und mit dem Motorblock 12 verbunden. Insbesondere bildet der Zylinderkopf ein Brennraumdach für den jeweiligen Brennraum.

Es ist erkennbar, dass die erste Abzweigstelle A1 stromab des Verdichters 20 und somit stromab des Verdichterrads 22 angeordnet ist. Bei dem in der Figur gezeigten Ausführungsbeispiel ist die erste Abzweigstelle A1 stromab der Verbindungsstelle V1 und stromauf der Drosselklappe 34 angeordnet. Das Sekundärluftsystem 52 kann an der Abzweigstelle A1 zumindest ein Teil des Verdichters 20 verdichteten Luft aus dem Ansaugtrakt abgezweigt und in das Sekundärluftsystem 52 eingeleitet werden. Da die Abzweigstelle A1 stromab des Verdichterrads 22 angeordnet ist, wird die Luft, die mittels des Sekundärluftsystems 52 an der Abzweigstelle A1 aus dem Ansaugtrakt 16 abgezweigt wird, auch als Verdichterluft bezeichnet. Die Verdichterluft kann in das Sekundärluftsystem 52 einströmen und wird mittels des Sekundärluftsystems 52 zu der jeweiligen Einleitstelle E geführt und kann an der jeweiligen Einleitstelle E aus dem Sekundärluftsystem 52 ausströmen und in den Abgastrakt 24 einströmen. Somit wird die Verdichterluft als Sekundärluft an der jeweiligen Einleitstelle E in den Abgastrakt 24 eingeleitet, das heißt eingeblasen. Das Einleiten der an der Abzweigstelle A aus dem Ansaugtrakt 16 abgezweigten und auch als Verdichterluft oder Sekundärluft bezeichneten Luft in den Abgastrakt 24 an der jeweiligen Einleitstelle E wird auch als Sekundärlufteinblasung bezeichnet.

Um nun einen besonders emissionsarmen Betrieb der Verbrennungskraftmaschine 10 realisieren zu können, ist das Sekundärluftsystem 52 auch an einer zweiten Abzweigstelle A2 fluidisch mit dem Ansaugtrakt 16 verbunden. Es ist erkennbar, dass die zweite Abzweigstelle A2 stromauf des Verdichters 20 und somit stromauf des Verdichterrads 22, insbesondere stromauf der Verbindungsstelle V2, angeordnet ist. Mittels des Sekundärluftsystems 52 kann an der zweiten Abzweigstelle A2 zumindest ein Teil der stromauf des Verdichters 20 den Ansaugtrakt 16 durchströmenden Luft aus dem Ansaugtrakt 16 abgezweigt und in das Sekundärluftsystem 52 eingeleitet werden. Die an der zweiten Abzweigstelle A2 aus dem Ansaugtrakt 16 abgezweigte und in das Sekundärluftsystem 52 eingeleitete Luft wird auch als Vorverdichterluft bezeichnet und kann mittels des Sekundärluftsystems 52 zu der jeweiligen Einleitstelle E geführt und an der jeweiligen Einleitstelle E als insbesondere weitere Sekundärluft in den Abgastrakt 24 eingeleitet, insbesondere eingeblasen, werden. Es ist erkennbar, dass sowohl die Verdichterluft als auch die Vorverdichterluft als Sekundärluft verwendet wird, die an der jeweiligen Abzweigstelle A1 beziehungsweise A2 aus dem Ansaugtrakt 16 abgezweigt und an der jeweiligen Einleitstelle E in den Abgastrakt 24 eingeleitet wird. Die jeweilige Einleitstelle E ist stromauf der Abgasnachbehandlungseinrichtung 48 angeordnet. Bei dem in der Fig. veranschaulichten Ausführungsbeispiel ist die jeweilige Einleitstelle E stromauf der Turbine 26 und insbesondere stromauf der Verbindungsstelle V3 angeordnet.

Das Sekundärluftsystem 52 weist einen ersten Zweig Z1 auf, welcher an der zweiten Abzweigstelle A2 fluidisch mit dem Ansaugtrakt 16 und an der jeweiligen Einleitstelle E fluidisch mit dem Abgastrakt 24 verbunden ist. Es ist erkennbar, dass das Sekundärluftsystem 52 ein insbesondere elektrisch betreibbare Sekundärluftpumpe 54 aufweist, mittels welcher die an der zweiten Abzweigstelle A2 abgezweigte Vorverdichterluft durch das Sekundärluftsystem 52, insbesondere durch den ersten Zweig Z1, hindurchgefördert und zu der jeweiligen Einleitstelle E hin gefördert werden kann. Dabei ist die Sekundärluftpumpe 54 in dem ersten Zweig Z1 angeordnet.

Das Sekundärluftsystem 52 umfasst außerdem ein erstes Rückschlagventil 56, welches in dem ersten Zweig Z1 stromab der Sekundärluftpumpe 54 angeordnet ist. Das Rückschlagventil 56 schließt in Richtung der Sekundärluftpumpe 54 und vermeidet somit eine Strömung von Luft durch den Zweig Z1 in Richtung der Sekundärluftpumpe 54. In Richtung der jeweiligen Einleitstelle E öffnet jedoch das Rückschlagventil 56, sodass das Rückschlagventil 56 die Strömung der Sekundärluft, insbesondere der Vorverdichterluft, von der Sekundärluftpumpe 54 hin zu der jeweiligen Einleitstelle E zulässt. Das Sekundärluftsystem 52 weist einen zweiten Zweig Z2 auf, welche an der ersten Abzweigstelle A1 fluidisch mit dem Ansaugtrakt 16 verbunden ist. Der zweite Zweig Z2 ist an einer Mündungsstelle M fluidisch mit dem ersten Zweig Z1 verbunden. Es ist erkennbar, dass die Mündungsstelle M stromab der Sekundärluftpumpe 54, insbesondere stromab des Rückschlagventils 56, angeordnet ist. Der zweite Zweig Z2 ist somit von der Verdichterluft durchströmbar. In dem zweiten Zweig Z2 ist ein zweites Rückschlagventil 58 des Sekundärluftsystems 52 angeordnet. Das zweite Rückschlagventil 58 sperrt in Richtung der Mündungsstelle M und öffnet in Richtung der Abzweigstelle A.

Das Sekundärluftsystem 52 umfasst außerdem ein zusätzlich zu den Rückschlagventilen 56 und 58 vorgesehenes Absperrventil 60, welches in dem zweiten Zweig Z2 und dabei stromauf des Rückschlagventils 58 und stromab der Abzweigstelle A1 angeordnet ist. Das Sekundärluftsystem 52 weist einen Drucksensor 62 auf, mittels welchem ein im Sekundärluftsystem 52, insbesondere stromab der Mündungsstelle M, herrschender Druck erfassbar ist. Des Weiteren umfasst das Sekundärluftsystem 52 ein Ventilelement 64, welches insbesondere in dem Zweig Z1 angeordnet ist. Vorliegend ist das Ventilelement 64 stromab der Mündungsstelle M und dabei insbesondere stromab des Drucksensors 62 angeordnet. Das Ventilelement 64 ist beispielsweise ein Sekundärluftventil, insbesondere ein Abgaskombiventil. Beispielsweise kann mittels des Ventilelements 64 eine Menge der Sekundärluft eingestellt werden, die an der jeweiligen Einleitstelle E in den Abgastrakt 24 eingeleitet wird. Es ist erkennbar, dass sich an der Mündungsstelle M die Verdichterluft mit der Vorverdichterluft mischen kann und somit eine Gesamtsekundärluft bilden kann, wobei mittels des Ventilelements 64 insbesondere eine Menge der Gesamtsekundärluft einstellbar ist, die an der jeweiligen Einleitstelle E in den Abgastrakt 24 einzuleiten ist, beziehungsweise eingeleitet wird. Bei einer Ausführungsform wäre es denkbar, dass das Rückschlagventil 58 in Richtung der Mündungsstelle M öffnet und in Richtung der Abzweigstelle A1 schließt und somit beispielsweise eine Strömung der Verdichterluft als Sekundärluft von der Abzweigstelle A1 zu der Mündungsstelle M zulässt und eine umgekehrte Strömung, das heißt eine Strömung von Luft von der Mündungsstelle M in Richtung der Abzweigstelle A1 unterbindet.

## Patentansprüche

1. Verbrennungskraftmaschine (10) für ein Kraftfahrzeug, mit einem von Luft durchströmbaren Ansaugtrakt (16), in welchem ein Verdichter (20) zum Verdichten der den Ansaugtrakt (16) durchströmenden Luft angeordnet ist, mit einem von Abgas der Verbrennungskraftmaschine (10) durchströmbaren Abgastrakt (24), und mit einem Sekundärluftsystem (52), welches mit dem Abgastrakt (24) an wenigstens einer Einleitstelle (E) und mit dem Ansaugtrakt (16) an einer stromab des Verdichters (20) angeordneten Abzweigstelle (A1) fluidisch verbunden ist, an welcher mittels des Sekundärluftsystems (52) zumindest ein Teil der mittels des Verdichters (20) verdichteten Luft aus dem Ansaugtrakt (16) abzweigbar und als Sekundärluft an der Einleitstelle (E) in den Abgastrakt (24) einleitbar ist, **dadurch gekennzeichnet, dass**
das Sekundärluftsystem (52) mit dem Ansaugtrakt (16) auch an einer stromauf des Verdichters (20) angeordneten, zweiten Abzweigstelle (A2), an welcher mittels des Sekundärluftsystems (52) zumindest ein Teil der stromauf des Verdichters (20) den Ansaugtrakt (16) durchströmenden Luft aus dem Ansaugtrakt (16) abzweigbar und als Sekundärluft an der Einleitstelle (E) in den Abgastrakt (24) einleitbar ist, fluidisch verbunden ist und eine Sekundärluftpumpe (54) aufweist, mittels welcher die an der zweiten Abzweigstelle (A2) abgezweigte Luft durch das Sekundärluftsystem (52) hindurch zu fördern und zu der Einleitstelle (E) hin zu fördern ist.

2. Verbrennungskraftmaschine (10) nach Anspruch 1,
**dadurch gekennzeichnet, dass**
das Sekundärluftsystem (52) einen an der zweiten Abzweigstelle (A2) mit dem Ansaugtrakt (16) und an der Einleitstelle (E) mit dem Abgastrakt (24) fluidisch verbundenen Zweig (Z1) aufweist, in welchem die Sekundärluftpumpe (52) angeordnet ist.

3. Verbrennungskraftmaschine (52) nach Anspruch 2,
**dadurch gekennzeichnet, dass**
in dem Zweig (Z1) stromab der Sekundärluftpumpe (52) ein Rückschlagventil (56) angeordnet ist, welches in Richtung der Sekundärluftpumpe (52) schließt und in Richtung der Einleitstelle (E)öffnet.

4. Verbrennungskraftmaschine (10) nach Anspruch 2 oder 3,
**dadurch gekennzeichnet, dass**
das Sekundärluftsystem (52) einen an der ersten Abzweigstelle (A1) mit dem Ansaugtrakt (16) und an einer Mündungsstelle (M) mit dem Zweig (Z1) fluidisch verbundenen, zweiten Zweig (Z2) aufweist.

5. Verbrennungskraftmaschine (10) nach Anspruch 4,
**dadurch gekennzeichnet, dass**
in dem zweiten Zweig (Z2) ein Rückschlagventil (58) angeordnet ist, welches in Richtung der ersten Abzweigstelle (A1) öffnet und in Richtung der Mündungsstelle (M) schließt.

6. Verbrennungskraftmaschine (10) nach Anspruch 5,
**dadurch gekennzeichnet, dass**
in dem zweiten Zweig (Z2) stromauf des in dem zweiten Zweig (Z2) angeordneten Rückschlagventils (58) ein zusätzliches Absperrventil (60) angeordnet ist.

7. Verbrennungskraftmaschine (10) nach einem der Ansprüche 4 bis 6 und nach Anspruch 3,
**dadurch gekennzeichnet, dass**
die Mündungsstelle (M) stromab des in dem ersten Zweig (Z1) angeordneten Rückschlagventils (56) angeordnet ist.

8. Verbrennungskraftmaschine (10) nach einem der vorhergehenden Ansprüche,
**dadurch gekennzeichnet, dass**
die Einleitstelle (E) in einem einem Brennraum der Verbrennungskraftmaschine (10) zugeordneten und durch einen Zylinderkopf der Verbrennungskraftmaschine (10) gebildeten Auslasskanal angeordnet ist.

## Claims

1. Internal combustion engine (10) for a motor vehicle, comprising an intake tract (16) through which air can flow, in which a compressor (20) is arranged for compressing the air flowing through the intake tract (16), an exhaust tract (24) through which exhaust gas from the internal combustion engine (10) can flow, and a secondary air system (52) which is fluidically connected to the exhaust tract (24) at at least one inlet point (E) and to the intake tract (16) at a branch-off point (A1) arranged downstream of the compressor (20), at which branch-off point at least a portion of the air compressed by means of the compressor (20) can be branched off from the intake tract (16) by means of the secondary air system (52) and introduced into the exhaust tract (24) as secondary air at the inlet point (E),
**characterized in that**
the secondary air system (52) is also fluidically connected to the intake tract (16) at a second branch-off point (A2) arranged upstream of the compressor (20), at which second branch-off point at least a portion of the air flowing through the intake tract (16) upstream of the compressor (20) can be branched off from the intake tract (16) by means of the secondary air system (52) and can be introduced into the exhaust tract (24) as secondary air at the inlet point (E), and has a secondary air pump (54) by means of which the air branched off at the second branch-off point (A2) is to be conveyed through the secondary air system (52) and to the inlet point (E).

2. Internal combustion engine (10) according to claim 1,
**characterized in that**
the secondary air system (52) has a branch (Z1) which is fluidically connected to the intake tract (16) at the second branch-off point (A2) and to the exhaust tract (24) at the inlet point (E), in which branch the secondary air pump (52) is arranged.

3. Internal combustion engine (52) according to claim 2,
**characterized in that**
a check valve (56) is arranged in the branch (Z1) downstream of the secondary air pump (52), which check valve closes in the direction of the secondary air pump (52) and opens in the direction of the inlet point (E).

4. Internal combustion engine (10) according to either claim 2 or claim 3,
**characterized in that**
the secondary air system (52) has a second branch (Z2) which is fluidically connected to the intake tract (16) at the first branch-off point (A1) and to the branch (Z1) at an opening point (M).

5. Internal combustion engine (10) according to claim 4,
**characterized in that**
a check valve (58) is arranged in the second branch (Z2), which check valve opens in the direction of the first branch-off point (A1) and closes in the direction of the opening point (M).

6. Internal combustion engine (10) according to claim 5,
**characterized in that**
an additional shut-off valve (60) is arranged in the second branch (Z2) upstream of the check valve (58) arranged in the second branch (Z2).

7. Internal combustion engine (10) according to any of claims 4 to 6 and according to claim 3,
**characterized in that**
the opening point (M) is arranged downstream of the check valve (56) arranged in the first branch (Z1).

8. Internal combustion engine (10) according to any of the preceding claims,
**characterized in that**
the inlet point (E) is arranged in an outlet channel associated with a combustion chamber of the internal combustion engine (10) and formed by a cylinder head of the internal combustion engine (10).

## Revendications

1. Moteur à combustion interne (10) pour un véhicule automobile, comportant un conduit d'aspiration (16) pouvant être traversé par de l'air, dans lequel est agencé un compresseur (20) pour comprimer l'air traversant le conduit d'aspiration (16), comportant un conduit de gaz d'échappement (24) pouvant être traversé par les gaz d'échappement du moteur à combustion interne (10), et comportant un système d'air secondaire (52), qui est relié fluidiquement au conduit de gaz d'échappement (24) en au moins un point d'introduction (E) et au conduit d'aspiration (16) en un point de dérivation (A1) agencé en aval du compresseur (20), au niveau duquel au moins une partie de l'air comprimé au moyen du compresseur (20) peut être dérivée du conduit d'aspiration (16) au moyen du système d'air secondaire (52) et peut être introduite dans le conduit de gaz d'échappement (24) sous forme d'air secondaire au niveau du point d'introduction (E),
**caractérisé en ce que**
le système d'air secondaire (52) est relié fluidiquement au conduit d'aspiration (16) également en un second point de dérivation (A2) agencé en amont du compresseur (20), au niveau duquel point au moins une partie de l'air traversant le conduit d'aspiration (16) en amont du compresseur (20) peut être dérivée du conduit d'aspiration (16) au moyen du système d'air secondaire (52) et peut être introduite sous forme d'air secondaire dans le conduit de gaz d'échappement (24) au niveau du point d'introduction (E) et présente une pompe à air secondaire (54) au moyen de laquelle l'air dérivé au niveau du second point de dérivation (A2) doit être transporté à travers le système d'air secondaire (52) et transporté vers le point d'introduction (E).

2. Moteur à combustion interne (10) selon la revendication 1,
**caractérisé en ce que**
le système d'air secondaire (52) présente une branche (Z1) reliée fluidiquement au conduit d'aspiration (16) au niveau du second point de dérivation (A2) et au conduit de gaz d'échappement (24) au niveau du point d'introduction (E), branche dans laquelle est agencée la pompe à air secondaire (52).

3. Moteur à combustion interne (52) selon la revendication 2,
**caractérisé en ce que**
dans la branche (Z1), en aval de la pompe à air secondaire (52), est agencé un clapet anti-retour (56) qui se ferme en direction de la pompe à air secondaire (52) et s'ouvre en direction du point d'introduction (E).

4. Moteur à combustion interne (10) selon la revendication 2 ou 3,
**caractérisé en ce que**
le système d'air secondaire (52) présente une seconde branche (Z2) reliée fluidiquement au conduit d'aspiration (16) au niveau du premier point de dérivation (A1) et à la branche (Z1) au niveau d'un point d'embouchure (M).

5. Moteur à combustion interne (10) selon la revendication 4,
**caractérisé en ce que**
dans la seconde branche (Z2) est agencé un clapet anti-retour (58) qui s'ouvre en direction du premier point de dérivation (A1) et se ferme en direction du point d'embouchure (M).

6. Moteur à combustion interne (10) selon la revendication 5,
**caractérisé en ce que**
dans la seconde branche (Z2), est agencée une vanne d'arrêt supplémentaire (60) en amont du clapet anti-retour (58) agencé dans la seconde branche (Z2).

7. Moteur à combustion interne (10) selon l'une des revendications 4 à 6 et selon la revendication 3,
**caractérisé en ce que**
le point d'embouchure (M) est agencé en aval du clapet anti-retour (56) agencé dans la première branche (Z1).

8. Moteur à combustion interne (10) selon l'une des revendications précédentes,
**caractérisé en ce que**
le point d'introduction (E) est agencé dans un canal d'échappement associé à une chambre de combustion du moteur à combustion interne (10) et formé par une culasse du moteur à combustion interne (10).
